# EUROPÄISCHE PATENTSCHRIFT

(11) **EP 1 441 153 B1**
(45) Veröffentlichungstag und Bekanntmachung des Hinweises auf die Patenterteilung: **31.10.2007**
(21) Anmeldenummer: 04000917.7
(22) Anmeldetag: 17.01.2004
(51) Int. Cl.: F16H 59/16, F16H 35/10, A01B 71/06, A01C 3/06

(54) **Miststreuwagen mit einer Getriebesteuerung**
Manure spreader with a transmission control device
Véhicule d'épandage avec un système de commande de boîte de vitesses

(30) Priorität: 21.01.2003 DE 20300970 U
(43) Veröffentlichungstag der Anmeldung: 28.07.2004
(73) Patentinhaber: Fliegl, Josef, 84513 Töging (DE)
(72) Erfinder: Fliegl, Josef, 84513 Töging (DE)
(74) Vertreter: Tetzner, Michael

(56) Entgegenhaltungen:
- DE-C- 871 670
- FR-A- 766 828
- GB-A- 760 213
- GB-A- 788 850
- US-A- 5 408 887

## Beschreibung

Die Erfindung betrifft einen Miststreuwagen mit einer Beladefläche für ein Streumedium, die an ihrer Stirnfläche vertikal angeordnete drehbare Streutellerwalzen und einen längs der Beladefläche bewegbaren Schieber aufweist. Ferner ist ein in einem Gehäuse untergebrachtes Getriebe mit einer Antriebswelle und einer Abtriebswelle vorgesehen, wobei die Antriebs- und die Abtriebswelle in dem Gehäuse gelagert sind. Weiterhin ist eine von einer Zugmaschine aus betätigbare Gelenkwelle gelenkig mit der Antriebswelle des Getriebes und mit dieser wiederum mit dem Getriebegehäuse verbunden, und die Abtriebswelle steuert die Drehbewegung der Streutellerwalzen.

Aus der GB-A-788859 ist ein Miststreuwagen gemäß dem Oberbegriff des Anspruches 1 bekannt.

Im Zusammenhang mit Kraftfahrzeugen sind aus der DE-C-871670 und der FR-A-766828 jeweils in einem Gehäuse untergebrachte Getriebe mit einer Antriebswelle und einer Abtriebswelle bekannt, wobei das Gehäuse in einer stationären Halterung aufgehängt ist. Das bei Veränderung des Drehmomentes einer Welle entstehende Reaktionsmoment des Gehäuses dient dabei als Steuergröße für eine Regelung.

Die der Erfindung zugrunde liegende Aufgabe besteht darin, eine Steuerung des Getriebes anzugeben, die dazu geeignet ist, einer äußeren Einwirkung auf das Getriebe so entgegen zu wirken, dass die Umdrehungszahlen der Antriebs- bzw. der Abtriebswelle, diese kompensierend, entsprechend geändert werden.

Diese Aufgabe wird durch die Merkmale des Anspruches 1 gelöst, wobei das Gehäuse in einer stationären Halterung aufgehängt ist, und dass das bei Veränderung des Drehmomentes einer Welle entstehende Reaktionsmoment des Gehäuses als Steuergröße für eine Regelung dient.

In den Unteransprüchen sind vorzugsweise Ausbildungen der Erfindung aufgeführt.

Zum besseren Verständnis wird die Erfindung im Folgenden im Zusammenhang mit einem speziellen Getriebe erläutert, ohne jedoch auf dieses beschränkt zu sein.

Dieses als Beispiel gewählte Getriebe umfasst eine Antriebswelle mit einem Antriebskegelrad und eine Abtriebswelle mit einem mit dem Antriebskegelrad kämmenden Tellerrad, die beide in einem Gehäuse gelagert sind, welches seinerseits pendelnd aufgehängt ist.

Das bei Abbremsung der mit dem Tellerrad verbundenen Antriebswelle entstehende Reaktionsmoment bewirkt eine Kippbewegung des Gehäuses. Diese Kippbewegung dient zur Betätigung einer Sensorik, die ihrerseits eine Änderung der Umdrehungszahl der das Kegelrad stirnseitig tragenden Abtriebswelle oder eine Verringerung der Bremskraft bei Konstanthaltung der Umdrehungszahl der Antriebswelle bewirkt.

Mit anderen Worten, abhängig von der Drehrichtung des Antriebskegelrades und damit auch der Drehrichtung des Tellerrades bewirkt das durch die Abbremsung verursachte Reaktionsmoment eine Schwenkung des Gehäuses im oder gegen den Uhrzeigersinn . In jedem Fall kann eine Sensorik betätigt werden, die entweder zum Antrieb des Antriebsrades führt und eine Änderung der Umdrehungszahl des Antriebsrades bewirkt, oder die bei gleichbleibendem Antrieb die Bremskraft verringert.

Vorzugsweise kann die Sensorik mit Hilfe einer Stellvorrichtung betätigt werden, die zwischen der stationären Halterung und dem schwenkbarem Gehäuse des Getriebes angeordnet ist und ein Gegenmoment gegen das Reaktionsmoment, d.h. gegen die Schwenkbewegung des Gehäuses ausübt. Dabei kann das Gegenmoment seinerseits veränderbar sein, um zu bestimmen, ab wann tatsächlich die Sensorik betätigt und auf den Antrieb oder die Bremskraft eingewirkt werden soll. Das Gegenmoment kann durch Anordnung von einer oder mehreren Druckfedern zwischen Halterung und Gehäuse erzielt werden, wobei deren Federkraft durch Stellschrauben bestimmbar ist.

Ist als Sensorik ein Schaltkreis hydraulischer und/oder elektrischer und/oder magnetischer Art vorgesehen, kann am Gehäuse ein Betätigungsstift angeordnet sein, der bei Verschwenkung des Gehäuses einen Endschalter des Schaltkreises betätigt.

Die Sensorik kann aber auch ein Übersetzungsgetriebe umfassen, welches durch ein Hebelgestänge betätigt wird, das seinerseits die Kippbewegung des Gehäuses auf das Übersetzungsgetriebe überträgt.

Vorzugsweise ist das Übersetzungsgetriebe als ein Zahnradgetriebe ausgebildet, das dazu dient, ein Durchflussregelventil zu betätigen, welches durch Veränderung des Ölflusses in den Arbeitszylindern, die mit der Antrieb- bzw. der Abtriebswelle verbunden sind, die Drehgeschwindigkeit der Wellen steuert.

Die vorstehend beschriebene Getriebesteuerung ist erfindungsgemäß in einem Miststreuwagen vorgesehen, auf dessen Beladefläche das Streumedium zu den an seiner Stirnseite befindlichen Streutellerwalzen geschoben wird. Ein von einer Zugmaschine aus betätigbarer Antrieb für die Drehbewegung der Streutellerwalzen ist vorzugsweise gelenkig mit dem Antriebskegelrad der erfindungsgemäßen Getriebesteuerung verbunden. Dabei kann der Abtrieb des Getriebes, gebildet aus dem kegelförmigen Tellerrad mit den Streutellerwalzen oder die Sensorik des Getriebes mit dem Schieber für die Bewegung des Streumediums auf der Beladefläche des Wagens verbunden sein.

Werden die Streutellerwalzen durch Verstopfung des ihnen zugeführten Streugutes abgebremst, führt das im Getriebe erzeugte Reaktionsmoment entsprechend der jeweiligen Einstellung der Federkräfte in der Stellvorrichtung dazu, dass über die Sensorik entweder der Antrieb verstärkt und über die Getriebesteuerung eine erhöhte Umdrehungsgeschwindigkeit der Streutellerwalzen erreicht wird, durch die die Verstopfung aufgelöst wird, oder dass durch die Sensorik die durch das Streumedium auf die Streutellerwalzen einwirkende Bremskraft bei gleichbleibender Antriebskraft verringert wird.

Das führt zu dem Ergebnis, dass bei Anwendung der erfindungsgemäßen Getriebesteuerung trotz unregelmäßig auftretender, auf die Streutellerwalzen einwirkender Kräfte eine gleichmäßige Verteilung des Streugutes während der Fahrt über das Feld gewährleistet wird.

Ist die Sensorik mit einem Schubzylinder mit dem Schieber für die Zuführung des Streumediums an die Streutellerwalzen verbunden, so kann die dem Schubzylinder zugeführte Ölmenge über ein Durchflussregelventil so gesteuert werden, dass die Vorschubgeschwindigkeit des Schiebers erhöht oder verringert wird. Hierzu wird die Kippbewegung des Gehäuse entsprechend der durch die Stellschrauben gewählten Einstellungen, vorzugsweise über ein Hebelgestänge an ein Zahnradgetriebe übertragen, welches seinerseits auf das Durchflussregelventil einwirkt, um die dem Schubzylinder zugeführte Ölmenge zu steuern. Die Folge dieser Steuerung ist, dass die Beladedichte des Streumediums keine Rolle mehr spielt. Es erfolgt eine gleichmäßige Steuerung über das Drehmoment des Antriebs.

Um die Verteilung des Streumediums unabhängig von der Fahrgeschwindigkeit des Streuwagens zu machen, wird vorzugsweise die Einstellung der Federkräfte, welche für die Auslösung der Tätigkeit der Sensorik maßgebend sind, über eine Einstellspindel vorgenommen, die von einem Stellmotor betätigt wird, der seinerseits abhängig von der Fahrgeschwindigkeit des Streuwagens arbeitet.

Vorzugsweise wird die Fahrgeschwindigkeit des Streuwagens über einen Radsensor erfasst, dessen Daten eine Steuerung des Stellmotors für die Einstellspindel bewirken.

Die Anwendung der erfindungsgemäßen Getriebesteuerung für die Ausbringung eines Streumediums auf ein Feld ist aber nur als ein mögliches Anwendungsbeispiel zu werten. In entsprechender Weise lassen sich zahlreiche weitere Anwendungsgebiete finden, bei denen der Einsatz der erfindungsgemäßen Getriebesteuerung zu einer Verbesserung der Arbeitsweise führen wird.

Einzelheiten der Erfindung ergeben sich aus der nachstehenden Beschreibung eines Ausführungsbeispieles sowie eines Anwendungsbeispieles anhand der Zeichnung.

Hierin zeigen
- Fig. 1: eine Draufsicht auf das aufgebrochene Getriebegehäuse,
- Fig. 2: eine Vorderansicht des Getriebegehäuses mit Stellvorrichtung,
- Fig. 3: eine Seitenansicht des Getriebes,
- Fig. 4: eine perspektivische Darstellung des mit dem Gehäuse der Getriebesteuerung verbundenen Übersetzungsgetriebes,
- Fig. 5: eine perspektivische Darstellung eines Ausschnitts aus Fig. 4,
- Fig. 6: eine Seitenansicht eines Miststreuwagens,
- Fig. 7: eine Draufsicht auf den Miststreuwagen mit dem Streuwerk,
- Fig. 8: eine perspektivische Darstellung des Getriebegehäuses mit Übersetzungsgetriebe und Durchflussregelventil im Verbindung mit den schematisch angedeuteten Streutellerwalzen,
- Fig. 9: eine Vorderansicht, teils in aufgebrochener Form der Fig. 8 und

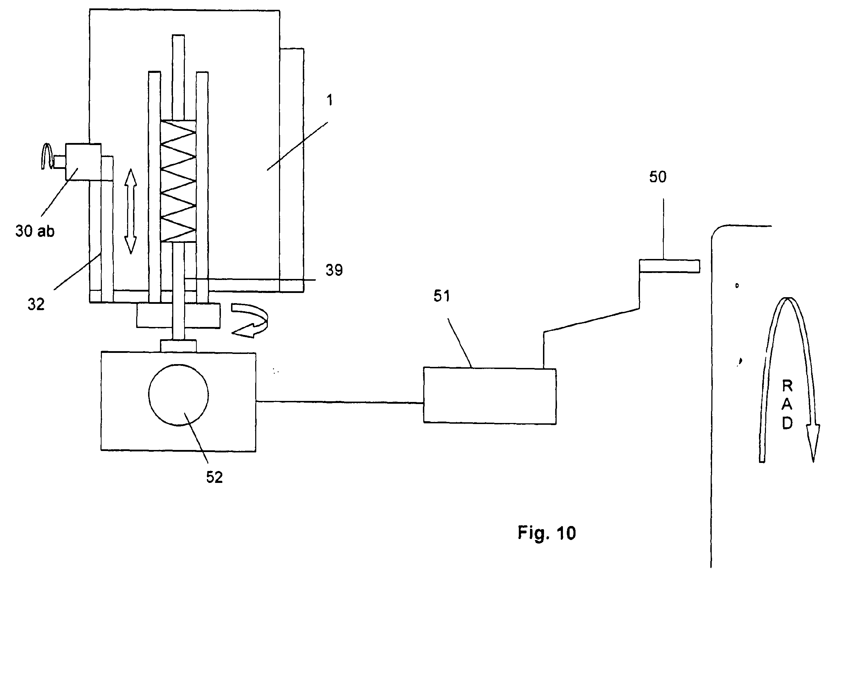

- Fig. 10: eine schematische Darstellung der Steuerung für die Einstellung der Federkraft.

Sich entsprechende Teile der Figuren sind mit übereinstimmenden Bezugszeichen gekennzeichnet.

Ein Gehäuse 1 ist kippbar an einer stationären Halterung 2a und 2b angelenkt.
In dem Gehäuse 1 ist eine Antriebswelle 3, die stirnseitig ein Kegelrad 4 trägt, über Rollenlager 5 und 6 drehbar gelagert. Das Kegelrad 4 kämmt mit einem kegelförmigen Tellerrad 7, welches auf einer Abtriebswelle 8 sitzt, die ihrerseits über Rollenlager 9 im Gehäuse 1 gelagert ist.

Die Antriebswelle 3 wird, wie durch den Pfeil a angedeutet, von außen gesehen, im Uhrzeigersinn angetrieben. Die Abtriebswelle 8 dreht sich demzufolge in der Zeichnung von links gesehen, gegen den Uhrzeigersinn (siehe Pfeil b). Bei Abbremsung der Abtriebswelle 8 wird ein gegen den Uhrzeigersinn auf das Gehäuse wirkendes Reaktionsmoment erzeugt (Pfeil c).

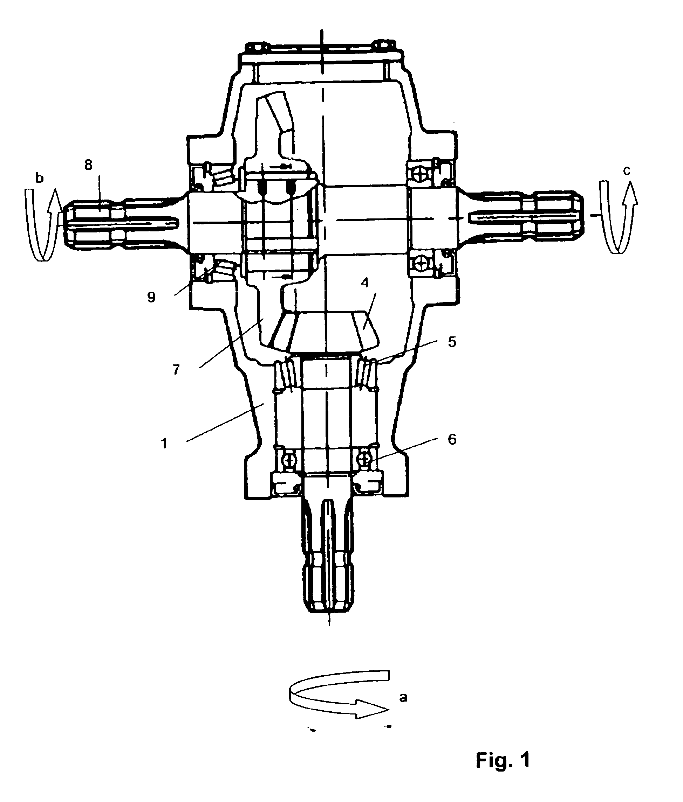

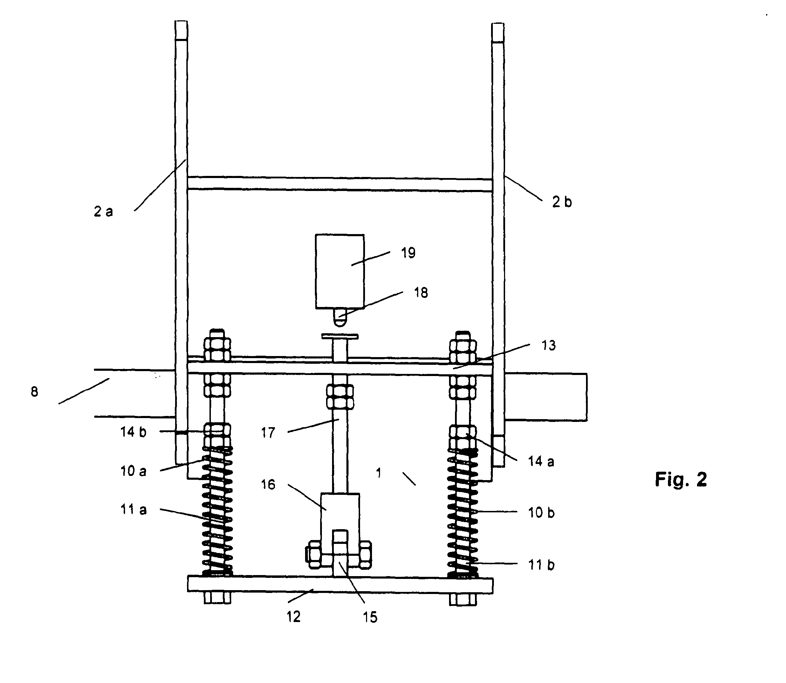

Fig. 2 zeigt die Vorderansicht des Getriebes, wie sie sich aus einer Blickrichtung von oben auf das Getriebe nach Fig. 1 ergibt.

Aus Fig. 2 ist eine Stellvorrichtung ersichtlich, die dazu dient, der Kippbewegung des Gehäuses 1 entgegenzuwirken. Damit wird erreicht, dass der Grenzwert, ab dem die Getriebesteuerung durch Kippen des Gehäuses 1 beginnt, bestimmbar ist.

Die Stellvorrichtung umfasst hier 2 Druckfedern 10a und 10b, die von je einer Gewindestange 11a, b gehalten sind. Die Gewindestangen 11a, b sind einerseits am Vorsprung einer Bodenplatte 12 des Gehäuses und andererseits an einem Verbindungssteg 13 zwischen den beiden Flanschen 2a und 2b der stationären Halterung verschraubt.
Mittels Stellschrauben 14 a, b lässt sich die Druckkraft der Federn 10a, b auf den Gewindestangen 11 a, b einstellen. Zwischen den Gewindestangen 11 a, b befindet sich auf dem Vorsprung der Bodenplatte 12 ein Vierkant mit Bohrung 15, der über ein Gabelstück 16 mit einem Stempel 17 verbunden ist. Der Stempel 17 ragt verschiebbar durch den Verbindungssteg 13 der beiden Flansche 2a, b der stationären Halterung hindurch, um bei seiner Aufwärtsbewegung den Endschalter 18 eines Schaltkreises 19, der an der Halterung 13 befestigt ist, zu betätigen. Dieser Kontakt erfolgt abhängig von der Einstellung der Druckfedern 10 a, b. Sobald bei Abbremsung der Abtriebswelle 8 das Reaktionsmoment das durch die eingestellte Federkraft bestimmte Gegenmoment übersteigt, bewegt sich der Stempel 17 zusammen mit dem nach oben gekippten Gehäuse 1 nach oben und kommt mit dem Endschalter 18 des Schaltkreises 19 in Kontakt. Der Schaltkreis 19, welcher als elektrischer Schaltkreis und/oder als hydraulischer und/oder als magnetischer Schaltkreis ausgebildet sein kann, steuert entweder die Umdrehungsgeschwindigkeit der Antriebswelle 3, diese verstärkend, oder die auf die Abtriebswelle wirkende Bremskraft, diese verringernd.

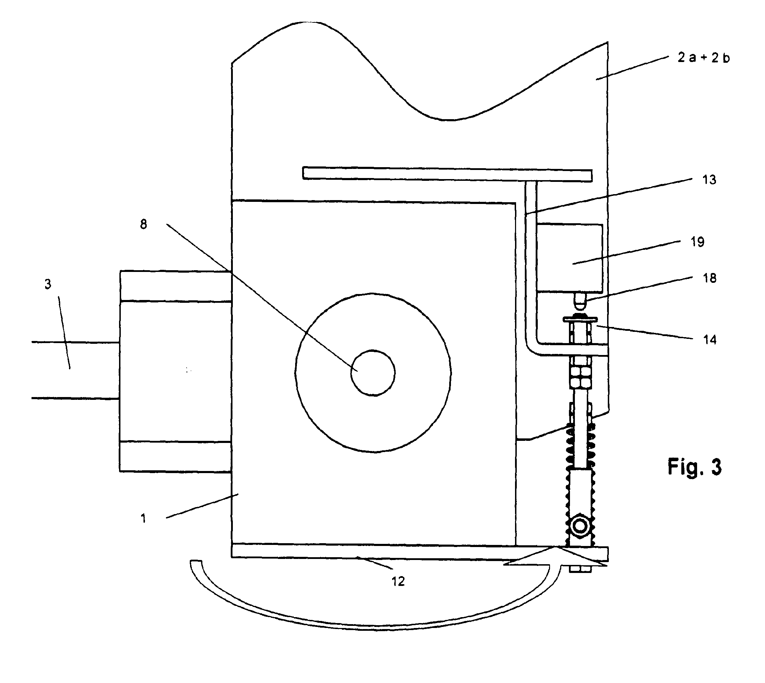

Fig. 3 zeigt in Seitenansicht die Verbindung der Antriebswelle 3 mit dem im Gehäuse befindlichen Getriebe sowie die Stelleinrichtung von der Seite. Hieraus ist klar ersichtlich, dass die Druckfedern 10a, b einerseits an dem Vorsprung der Bodenplatte 12 des Gehäuses 1 und andererseits mit den Flanschen 2 a , b der stationären Halterung verbunden sind. Der Endschalter 18 sitzt am Verbindungssteg 13.

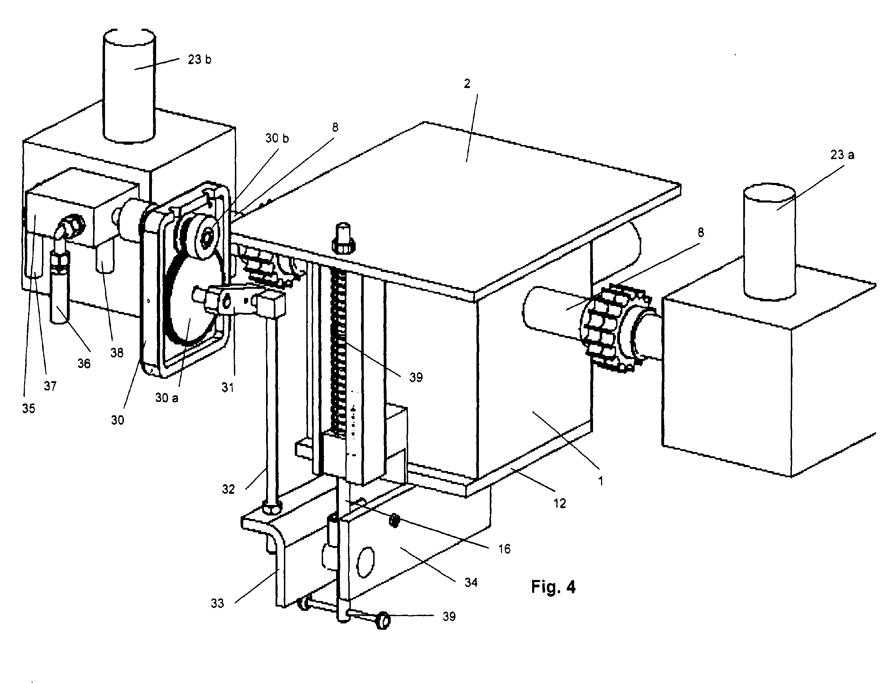

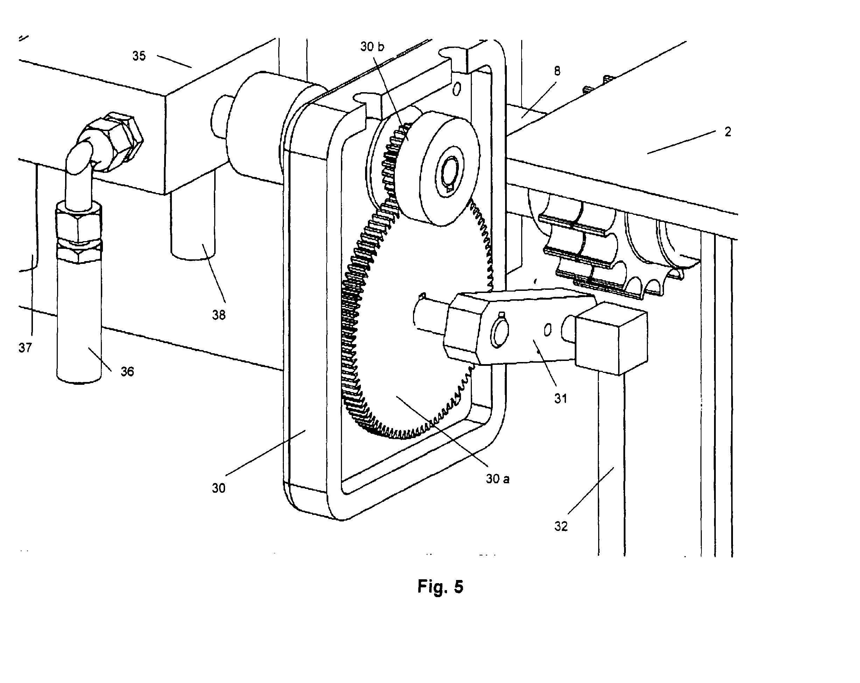

In den Fig. 4 und 5 ist ein Übersetzungsgetriebe 30 mit den beiden Zahnrädern 30a und 30b gezeigt, welches über ein Hebelgestänge 31, 32 betätigbar ist. Der Hebelarm 31 ist an einen von zwei miteinander verbundenen Vorsprüngen 33, 34 befestigt, die an der Bodenplatte 12 des Gehäuses sitzen.

Jede Kippbewegung des Gehäuses 1 wird daher über den Hebelarm 31 auf den gelenkig mit diesem verbundenen Hebelarm 32 und von diesem auf das Zahnrad 30a übertragen, welches mit dem kleineren Zahnrad 30 b kämmt. Auf diese Weise wird die Kippbewegung des Gehäuses 1 entsprechend dem Größenverhältnis der beiden Zahnräder 30 a, b übersetzt an ein Durchflussregelventil 35 übertragen. Vor hier wird die Ölzufuhr durch den Auslass 36 an den Betätigungszylinder für die Antriebswelle 3 gesteuert. Die weiteren Auslassstutzen 37 und 38 sind mit der Ölpumpe (nicht dargestellt) bzw. einem Tank (nicht dargestellt) verbunden.

Bei den in den Fig. 4 und 5 gezeigten Ausbildungen wird das gegen die Kippbewegung des Gehäuses 1 wirkende Gegenmoment mit Hilfe einer Knebelspindel 39 eingestellt. Durch diese lässt sich der Federdruck bestimmen. Die Knebelspindel 39 ist, wie im Zusammenhang in Fig. 2 erläutert, in einem Gabelstück 16 verschiebbar gelagert, so dass sie die Kippbewegung des Gehäuses 1 nicht behindert.

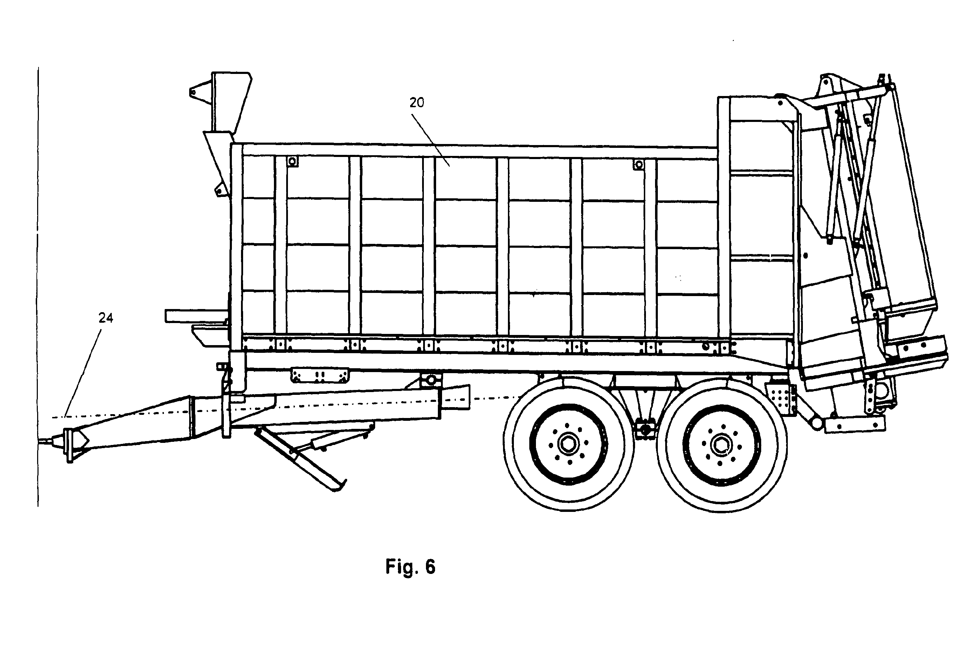

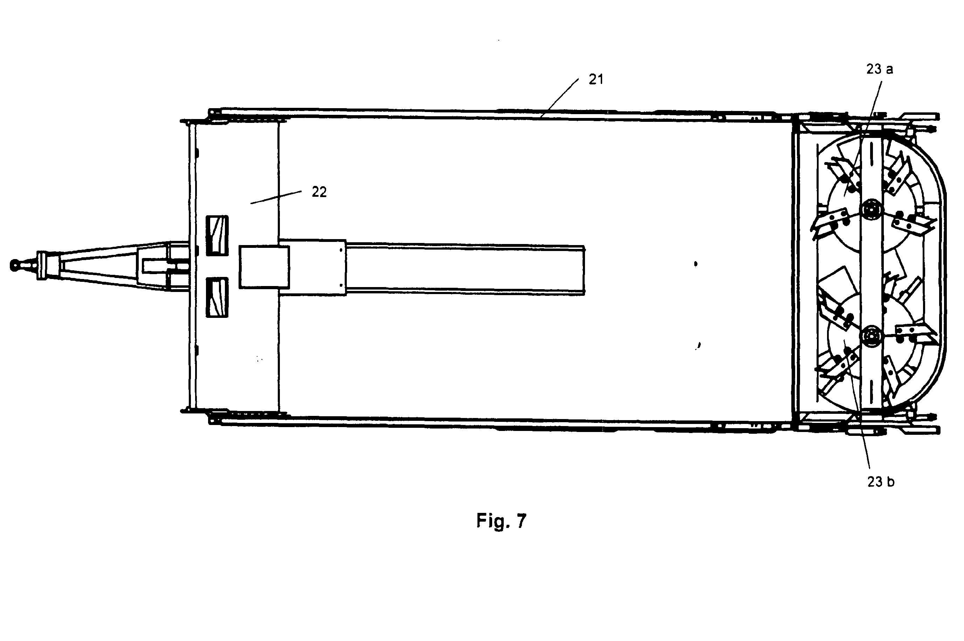

In Fig. 6 ist die Seitenansicht eines Miststreuwagens gezeigt. Auf seiner Bodenfläche 21 befindet sich der Mist, der mittels eines Schiebers 22, siehe Fig. 7, nach rechts, Richtung Streutellerwalzen geschoben wird. An der Stirnseite des Streuwagens 20 befinden sich zwei sich gegenläufig drehende Streutellerwalzen 23 a,b. Die Streutellerwalzen 23 a,b, sind mit der Abtriebswelle 8 verbunden. Die Kraftübertragung von der Zugmaschine zur Getriebesteuerung erfolgt über eine Gelenkwelle 24, die mit der Antriebswelle 3 verbunden ist.

Sobald bei einer Stauung des Streumediums zwischen den Streutellerwalzen 23 a, b, die Abtriebswelle 8 abgebremst wird, entsteht ein Reaktionsmoment, welches nach Maßgabe der Einstellung der Federkräfte 10 a, b in der Stellvorrichtung das Gehäuse 1 nach oben kippt (Fig. 3, gegen den Uhrzeigersinn). Der Stempel 17 kontaktiert dann den Endschalter 18. Die Schaltsensorik 19 bewirkt eine Verstärkung der Antriebskraft durch die Gelenkwelle 24 auf die Antriebswelle 3 des Getriebes und über dessen Abtriebswelle 8 eine erhöhte Umdrehungsgeschwindigkeit der Streutellerwalzen 23a, b, durch die die Miststauung innerhalb der Streutellerwalzen behoben wird.

Alternativ kann die Sensorik aber auch bei konstant bleibender Antriebskraft auf die Bewegung des Schiebers 22 einwirken, um die auf die Abtriebswelle wirkende Bremskraft zu verringern.

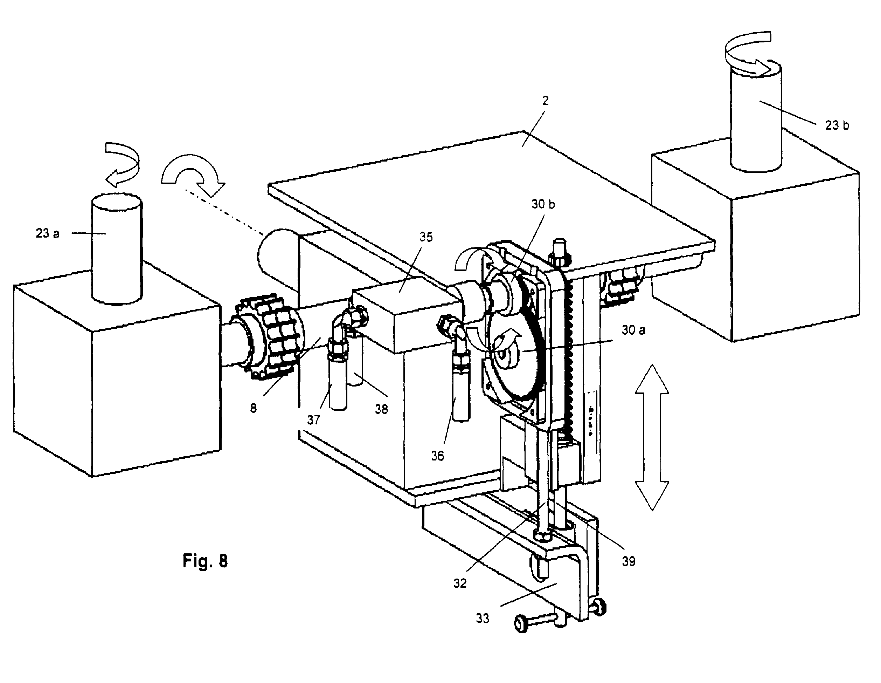

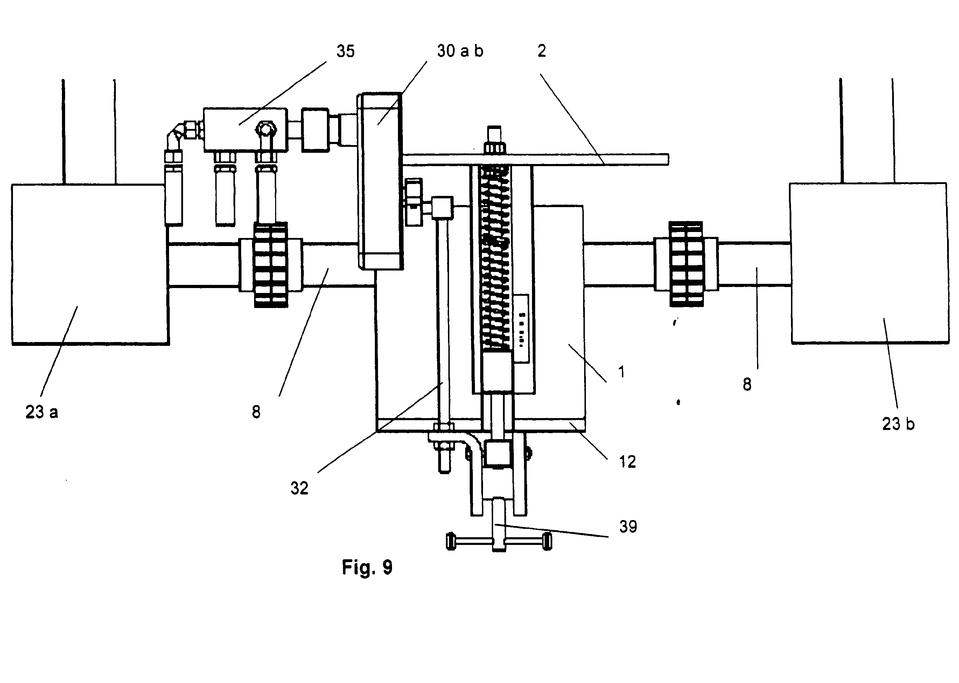

Dieser Fall ist in den Fig. 8 und 9 gezeigt, die den Einsatz des Übersetzungsgetriebes nach den Fig. 4 und 5 bei dem in Fig. 6 und 7 gezeigten Miststreuwagen 20 zeigen. Die Abtriebswelle 3 des Getriebes ist über Kupplungen 40 a, b mit den Streutellerwalzen 23 a, 23 b verbunden. Die Antriebswelle 3 führt zum Betätigungszylinder für den Schiebeboden 22.

Anstelle der Grundeinstellung des Gegenmomentes gegen die Kippbewegung des Getriebegehäuses 1, die von Hand z.B. an der Knebelspindel 39 oder an den Federn 10 a, b vorgenommen wird, lässt sich das Gegenmoment auch abhängig von der Fahrgeschwindigkeit des Streuwagens 22 kontinuierlich verändern. Hierzu liefert die Fahrgeschwindigkeit des Streuwagens über einen Radsensor 50 Daten zur Steuerung 51 eines Antriebsmotors 52, der mit der Knebelspindel 39 verbunden ist, und deren Einstellung in Abhängigkeit von der Fahrgeschwindigkeit steuert.

Hierdurch wird bewirkt, dass die Streudichte des Streumediums unabhängig von der Fahrgeschwindigkeit gleichmäßig erhalten wird, ohne durch die Unregelmäßigkeit der Zulieferung des Streumediums an die Streutellerwalzen 23 a, b beeinflusst zu werden

## Patentansprüche

1. Miststreuwagen, umfassend eine Beladefläche für ein Streumedium, die an ihrer Stirnfläche vertikal angeordnete drehbare Streutellerwalzen (23 a, b) und einen längs der Beladefläche bewegbaren Schieber (22) aufweist, wobei ferner ein in einem Gehäuse (1) untergebrachtes Getriebe mit einer Antriebs- und einer Abtriebswelle (3, 8) vorgesehen ist, wobei die Antriebs- und die Abtriebswelle (3, 8) in dem Gehäuse gelagert sind, und wobei eine von einer Zugmaschine aus betätigbare Gelenkwelle (24) gelenkig mit der Antriebswelle (3) des Getriebes und mit dieser wiederum mit dem Gehäuse (1) verbunden ist und die Abtriebswelle (8) die Drehbewegung der Streutellerwalzen steuert,
**dadurch gekennzeichnet, dass** das Gehäuse (1) in einer stationären Halterung (2a, 2b) aufgehängt ist und das bei Veränderung des Drehmomentes einer Welle (3,8) entstehende Reaktionsmoment des Gehäuses als Steuergröße für eine Regelung dient.

2. Getriebe nach Anspruch 1, **dadurch gekennzeichnet, dass** das Getriebe ein mit der Antriebswelle (3) verbundenes Antriebskegelrad (4) und ein mit diesem kämmendes kegelförmiges Tellerrad (7) umfasst, welches mit der Antriebswelle (8) verbunden ist, dass beide Wellen in dem Gehäuse (1) gelagert sind, welches seinerseits kippbar in der stationären Halterung (2a,2b) aufgehängt ist.

3. Getriebe nach Anspruch 1 oder 2, **dadurch gekennzeichnet, dass** in der stationären Halterung (2a,2b) eine Sensorik (19) untergebracht ist.

4. Getriebe nach einem der vorhergehenden Ansprüche, **dadurch** gekennzeichn e t, dass das bei Abbremsung der mit dem Tellerrad (7) verbundenen Abtriebswelle (8) entstehende Reaktionsmoment zu einer Kippbewegung des Gehäuses (1) führt, durch die die Sensorik (19) betätigt wird, welche ihrerseits eine Änderung der Umdrehungszahl der das Kegelrad (4) stirnseitig tragenden Antriebswelle (3) oder eine Verringerung der Bremskraft bei Konstanthaltung der Umdrehungszahl der Antriebswelle bewirkt.

5. Getriebe nach einem der vorhergehenden Ansprüche, **dadurch gekennzeichnet, dass** eine Stellvorrichtung (10 a,b, 11 a,b, 14 a,b ,39) zwischen der stationären Halterung (2a,b) und dem Gehäuse (1) angeordnet ist, die eine Gegenkraft gegen die Kippbewegung des Gehäuses (1) ausübt, um den Einsatzzeitpunkt der Sensorik zu bestimmen.

6. Getriebe nach einem der vorhergehenden Ansprüche, **dadurch** g**ekennzeichnet**, dass die Gegenkraft der Stellvorrichtung veränderbar ist.

7. Getriebe nach einem der vorhergehenden Ansprüche, **dadurch gekennzeichnet, dass** die Stellvorrichtung durch eine oder mehrere Druckfedern (10 a,b) gebildet ist, deren Federkraft mittels Stellschrauben (14 a,b) bestimmbar ist.

8. Getriebe nach einem der vorhergehenden Ansprüche, **dadurch gekennzeichnet, dass** die Stellvorrichtung einen am Gehäuse (1) angeordneten Betätigungsstift (17) umfasst, der bei Verschwenkung des Gehäuses (1) einen Endschalter (18) der Sensorik (19) betätigt.

9. Getriebe nach einem der vorhergehenden Ansprüche, **dadurch gekennzeichnet, dass** die Sensorik (19) ein Übersetzungsgetriebe (30 a,b) umfasst, welches durch ein Hebelgestänge (31, 32) betätigt wird, dass seinerseits die Kippbewegungen des Gehäuses auf das Übersetzungsgetriebe überträgt.

10. Getriebe nach Anspruch 9, **dadurch gekennzeichnet, dass** das Übersetzungsgetrisebe als ein Zahnradgetriebe (30a, 30b) ausgebildet ist.

11. Getriebe nach Anspruch 9 oder 10, **dadurch gekennzeichnet, dass** das Übersetzungsgetriebe ein Durchflussregelventil (35) betätigt, welches durch Veränderung des Ölflusses in, über mit der Antriebs- und/oder Abtriebswelle verbundenen Arbeitszylindern ,deren Rotationsgeschwindigkeit steuert.

12. Miststreuwagen nach einem oder mehreren der vorhergehenden Ansprüche, **dadurch gekennzeichnet, dass** die Lage des Schiebers (22) relativ zur Bodenfläche des Wagens über einen Schubzylinder steuerbar ist, wobei die dem Schubzylinder zugeführte Ölmenge durch ein Durchflussregelventil (35) bestimmt wird, welches seinerseits durch ein Übersetzungsgetriebe (30 a, b) gesteuert wird, dem ,über ein Hebelgestänge (31, 32), die, durch das bei Änderung der auf die Abtriebswelle (8) einwirkenden Kraft entstehende Reaktionsmoment verursachte Kippbewegung des Getriebegehäuses (1) übertragen wird.

13. Miststreuwagen nach Anspruch 12, **dadurch gekennzeichnet, dass** die Federkräfte für die Bestimmung des Gegenmomentes gegen die Kippbewegung des Getriebegehäuses kontinuierlich veränderbar sind.

14. Miststreuwagen nach Anspruch 13, **dadurch gekennzeichnet, dass** die Einstellung der Federkräfte über eine Einstellspindel (399 erfolgt, die von einem Stellmotor (51) betätigt wird, der seinerseits abhängig von der Fahrgeschwindigkeit des Mistwagens ist.

15. Miststreuwagen nach Anspruch 14, **dadurch gekennzeichnet, dass** die Fahrgeschwindigkeit des Mistwagens über einen Radsensor (50) erfasst wird, dessen Daten über eine Steuerung den Stellmotor (51) für die Einstellspindel (39) betätigt.

## Claims

1. A manure spreader, comprising a load surface for a spreading medium which has at its end face vertically arranged rotatable distributing plate rollers (23a, 23b) and a slider member (22) movable along the load surface, a transmission provided in a housing (1) being further equipped with a drive shaft and a driven shaft (3, 8), the drive shaft and the driven shaft (3, 8) being mounted in the housing, and a universal joint propeller shaft (24) operable from a tractor being hinged to the drive shaft (3) of the transmission and further connected therewith to the housing (1), and the driven shaft (8) controlling the rotary movement of the distributing plate rollers,
**characterized in that** the housing (1) is suspended in a stationary mounting (2a, 2b) and the reaction moment of the housing produced on alteration of the torque of a shaft (3, 8) serves as a control magnitude for control.

2. A transmission according to claim 1, **characterized in that** the transmission comprises a crown wheel (4) connected to the drive shaft (3) and a bevel ring gear (7) meshing therewith and connected to the drive shaft (8), **in that** both shafts are mounted in the housing (1) which is in turn tiltably suspended in the stationary mounting (2a, 2b).

3. A transmission according to claim 1 or claim 2, **characterized in that** a sensor device (19) is housed in the stationary mounting (2a, 2b).

4. A transmission according to any one of the preceding claims, **characterized in that** the reaction moment produced during braking of the driven shaft (8) connected to the ring gear (7) leads to a tilting movement of the housing (1), by means of which the sensor device (19) is actuated and in turn effects an alteration in the revolution speed of the drive shaft (3) carrying on the face the bevel gear (4), or a reduction in the braking force with the revolution speed of the drive shaft being kept constant.

5. A transmission according to any one of the preceding claims, **characterized in that** a control device (10a, 10b, 11a, 11b, 14a, 14b, 39) is arranged between the stationary mounting (2a, 2b) and the housing (1) and exerts a counterforce counter to the tilting movement of the housing (1) in order to determine the moment of use of the sensor device.

6. A transmission according to any one of the preceding claims, **characterized in that** the counterforce of the control device is variable.

7. A transmission according to any one of the preceding claims, **characterized in that** the control device is formed by one or more compression springs (10a, 10b), the spring force of which can be determined by means of adjusting screws (14a, 14b).

8. A transmission according to any one of the preceding claims, **characterized in that** the control device comprises an actuating pin (17) arranged on the housing (1) and actuating an end switch (18) of the sensor device (19) during pivoting of the housing (1).

9. A transmission according to any one of the preceding claims, **characterized in that** the sensor device (19) comprises a transmission gear (30a, 30b) which is actuated by means of a lever mechanism (31, 32), which in turn transmits the tilting movements of the housing to the transmission gear.

10. A transmission according to claim 9, **characterized in that** the transmission gear is in the form of toothed gearing (30a, 30b).

11. A transmission according to claim 9 or claim 10, **characterized in that** the transmission gear actuates a through flow control valve (35) which, by altering the oil flow in the working cylinders connected to the drive and/or driven shaft, controls the rotation speed of the drive and/or driven shaft.

12. A manure spreader according to one or more of the preceding claims, **characterized in that** the position of the slider member (22) relative to the floor of the spreader is controllable via a thrust cylinder, the amount of oil fed to the thrust cylinder being determined by means of a through flow control valve (35) which is in turn controlled by means of a transmission gear (30a, 30b) to which, via a lever mechanism (31, 32), the tilting movement of the transmission housing (1) caused by the reaction moment produced on alteration of the force acting on the driven shaft (8) is transmitted.

13. A manure spreader according to claim 12, **characterized in that** the spring forces for determining the counterforce counter to the tilting movement of the transmission housing are infinitely variable.

14. A manure spreader according to claim 13, **characterized in that** the adjustment of the spring forces is effected via an adjusting spindle (39) actuated by a servomotor (51) which is in turn dependent on the travelling speed of the manure spreader.

15. A manure spreader according to claim 14, **characterized in that** the travelling speed of the manure spreader is picked up via a wheel sensor (50), the data from which, via a control means, actuates the servomotor (51) for the adjusting spindle (39).

## Revendications

1. Véhicule épandeur de fumier, comprenant une surface de chargement pour un agent d'épandage, qui présente des cylindres à plateau d'épandage (23a, b) rotatifs et disposés verticalement sur sa surface avant et un coulisseau (22) pouvant être déplacé le long de la surface de chargement, sachant qu'une boîte de vitesses logée dans un boîtier (1) avec un arbre d'entraînement et un arbre de sortie (3, 8) est également prévue, l'arbre d'entraînement et l'arbre de sortie (3, 8) étant fixés dans le boîtier, et un arbre articulé (24) pouvant être actionné à partir d'une machine de traction étant relié de façon articulée à l'arbre d'entraînement (3) de la boîte de vitesses et par celle-ci à nouveau au boîtier (1) et l'arbre de sortie (8) commandant le mouvement de rotation des cylindres à plateau d'épandage,
**caractérisé en ce que** le boîtier (1) est suspendu dans une fixation (2a, 2b) stationnaire et le couple de réaction du boîtier, qui se forme en cas de variation du couple d'un arbre (3, 8), sert de grandeur de commande pour un réglage.

2. Boîte de vitesses selon la revendication 1, **caractérisée en ce que** la boîte de vitesses présente un pignon d'attaque (4) relié à l'arbre d'entraînement (3) et une couronne de différentiel (7) conique s'engrenant avec ce pignon, laquelle couronne est reliée à l'arbre d'entraînement (8), **en ce que** les deux arbres sont fixés dans le boîtier (1), lequel est suspendu pour sa part de façon basculante dans la fixation (2a, 2b) stationnaire.

3. Boîte de vitesses selon la revendication 1 ou 2, **caractérisée en ce qu'**un capteur (19) est logé dans la fixation (2a, 2b) stationnaire.

4. Boîte de vitesses selon l'une quelconque des revendications précédentes, **caractérisée en ce que** le couple de réaction, qui se forme en cas de freinage de l'arbre de sortie (8) relié à la couronne de différentiel (7), entraîne un mouvement de basculement du boîtier (1), par lequel le capteur (19) est actionné, lequel entraîne pour sa part une variation du régime de l'arbre d'entraînement (3) portant la couronne de différentiel (4) côté avant ou une diminution de la force de freinage si le régime de l'arbre d'entraînement est maintenu constant.

5. Boîte de vitesses selon l'une quelconque des revendications précédentes, **caractérisée en ce qu'**un dispositif de réglage (10a, b, 11a, b, 14a, b, 39) est disposé entre la fixation (2a, b) stationnaire et le boîtier (1), lequel dispositif exerce une force antagoniste contre le mouvement de basculement du boîtier (1) afin de déterminer le moment d'utilisation du capteur.

6. Boîte de vitesses selon l'une quelconque des revendications précédentes, **caractérisée en ce que** la force antagoniste du dispositif de réglage est modifiable.

7. Boîte de vitesses selon l'une quelconque des revendications précédentes, **caractérisée en ce que** le dispositif de réglage est formé par un ou plusieurs ressorts de pression (10a, b) dont la force de ressort peut être déterminée au moyen de vis de réglage (14a, b).

8. Boîte de vitesses selon l'une quelconque des revendications précédentes, **caractérisée en ce que** le dispositif de réglage comprend une broche d'actionnement (17) disposée sur le boîtier (1), laquelle broche actionne un interrupteur fin de course (18) du capteur (19) en cas de basculement du boîtier.

9. Boîte de vitesses selon l'une quelconque des revendications précédentes, **caractérisée en ce que** le capteur (19) comporte une transmission multiplicatrice (30a, b), laquelle est actionnée par une tringle à levier (31, 32), qui pour sa part transmet les mouvements de basculement du boîtier à la transmission multiplicatrice.

10. Boîte de vitesses selon la revendication 9, **caractérisée en ce que** la transmission multiplicatrice est conçue comme une transmission par engrenage (30a, 30b).

11. Boîte de vitesses selon la revendication 9 ou 10, **caractérisée en ce que** la transmission multiplicatrice actionne une vanne régulatrice de débit (35), laquelle, par variation du flux d'huile dans des cylindres de travail reliés à l'arbre d'entraînement et/ou à l'arbre de sortie, commande la vitesse de rotation du cylindre.

12. Véhicule épandeur de fumier selon l'une quelconque ou plusieurs des revendications précédentes, **caractérisé en ce que** la position du coulisseau (22) par rapport à la surface de fond du véhicule peut être commandée par un cylindre de poussée, la quantité d'huile amenée au cylindre de poussée étant déterminée par une vanne régulatrice du débit (35), qui pour sa part est commandée par une transmission multiplicatrice (30a, b), à laquelle le mouvement de basculement du boîtier de boîte de vitesses (1), causé en cas de variation de la force agissant sur l'arbre de sortie (8), est transmis par une tringle à levier (31, 32).

13. Véhicule épandeur de fumier selon la revendication 12, **caractérisé en ce que** les forces de ressort pour la détermination du couple antagoniste contre le mouvement de basculement du boîtier de boîte de vitesses sont modifiables de façon continue.

14. Véhicule épandeur de fumier selon la revendication 13, **caractérisé en ce que** le réglage des forces de ressort s'effectue au moyen d'une broche de réglage (399) qui est actionnée par un servomoteur (51), lequel est dépendant pour sa part de la vitesse de déplacement du véhicule épandeur de fumier.

15. Véhicule épandeur de fumier selon la revendication 14, **caractérisé en ce que** la vitesse de déplacement du véhicule à fumier est saisi au moyen d'un capteur de roue (50), dont les données actionnent par une commande le servomoteur (51) pour la broche de réglage (39).
